Europäisches Patentamt

European Patent Office

Office européen des brevets

(11) Veröffentlichungsnummer : **0 029 468**
**B2**

# (12) NEUE EUROPÄISCHE PATENTSCHRIFT

(45) Veröffentlichungstag der neuen Patentschrift :
28.08.85

(21) Anmeldenummer : 79200694.2

(22) Anmeldetag : 27.11.79

(51) Int. Cl.⁴ : **B 01 D 23/20**, B 01 D 23/16, B 01 D 23/24, C 02 F 1/00

(54) **Rückspülbare Filteranlage.**

(30) Priorität : 05.11.79 CH 9900/79

(43) Veröffentlichungstag der Anmeldung :
03.06.81 Patentblatt 81/22

(45) Bekanntmachung des Hinweises auf die Patenterteilung : 20.10.82 Patentblatt 82/42

(45) Bekanntmachung des Hinweises auf die Entscheidung über den Einspruch : 28.08.85 Patentblatt 85/35

(84) Benannte Vertragsstaaten :
AT DE FR GB IT

(56) Entgegenhaltungen :
DE-A- 1 784 397
FR-A- 2 429 033
GB-A- 552 302
Degrémont Handbuch, "Wasseraufbereitung Abwasserreinigung", 1974, Bauverlag GmbH, Wiesbaden, Berlin, Seiten 186,187

(73) Patentinhaber : GEBRÜDER SULZER AKTIENGE-SELLSCHAFT
Zürcherstrasse 9
CH-8401 Winterthur (CH)

(72) Erfinder : Müller, Otto
Hofwiesenstrasse 29
CH-8057 Zürich (CH)

(74) Vertreter : Sparing, Nikolaus, Dipl.-Ing. et al
Rethelstrasse 123
D-4000 Düsseldorf 1 (DE)

EP 0 029 468 B2

**Beschreibung**

Die Erfindung betrifft eine rückspülbare Filteranlage für die Aufbereitung von Flüssigkeiten mit mindestens einem Festbett aus körnigem Material, über dem ein Überstauraum für die zu filtrierende Flüssigkeit vorhanden ist, aus dem durch eine Seitenwand ein mit einer Schlammwasserklappe verschliessbarer Schlitz in einen Schlammwasserablaufkanal für die Rückspülflüssigkeit führt.

Körnige Massen, die in Festbetten von Filteranlagen für die Aufbereitung von Flüssigkeiten eingesetzt werden, bedürfen einer Rückspülung, die in der Regel nach dem Dreiphasen-Rückspülverfahren mit Luft und Wasser im Gegenstrom zur Filtrationsrichtung durchgeführt wird. Erfolgt diese Rückspülung in vertikaler Richtung von unten nach oben, so werden die während des Filtrationsbetriebs in der körnigen Masse ausgeschiedenen Verunreinigungen in den Überstauraum über dem Festbett ausgespült. Die mit diesen Verunreinigungen beladene Spülflüssigkeit — im folgenden als Schlammwasser bezeichnet — muss aus der Filteranlage abgeleitet werden. Filteranlagen der vorstehend genannten Art sind daher bekannt und beispielsweise in folgenden Veröffentlichungen gezeigt : F. Lipp und H. Kubli « Seewasserwerk für Trinkwasserversorgung der Stadt Biel », « Sulzer Technische Rundschau » (STR), 58, (1976), Heft 1, Seite 19-27, insbesondere Bild 4 auf Seite 21, oder F. Lipp « Entsäuerungsanlage « Massagno » für die Wasserversorgung der Stadt Lugano » STR 54, (1972), Heft 3, Seite 208-212, insbesondere Bild 4 auf Seite 211.

Bei der Dreiphasen-Rückspülung ist die erste Spülphase, die sogenannte Aufbrechphase, die mit Luft erfolgt, bekanntlich dann am wirksamsten, wenn sie bei möglichst tief abgesenktem Wasserspiegel im Überstauraum über dem Festbett erfolgt. Diese Forderung bedingt, dass der Schlitz in dem Schlammwasserablaufkanal und damit die Schlammwasserklappe möglichst knapp über dem Festbett angeordnet werden soll, also der sogenannte Freibord, d. h. der Abstand zwischen der oberkante des Festbettes und der Unterkante des Schlitzes, der zum Schlammwasserablaufkanal führt, möglichst klein ist.

Die bisherigen, in den genannten Veröffentlichungen gezeigten Konstruktionen für die Schlammwasserklappe erfordern ein relativ hohes Freibord in der Grössenordnung von 300-500 mm, damit insbesondere beim Einsatz leichter körniger Materialien und bei hohen Abflussgeschwindigkeiten des Schlammwassers keine Körner mitgerissen und ausgetragen werden ; ein hohes Freibord widerspricht aber der vorstehend erhobenen Forderung. Darüberhinaus müssen bei einem hohen Freibord die aus dem Festbettmaterial gespülten Verunreinigungen über die relativ hochliegende Unterkante des Schlitzes ausgetragen werden, wodurch zusätzlich der Spülwasserbedarf erhöht wird.

Aufgabe der Erfindung ist es, eine Filteranlage mit Schlammwasserklappe zu schaffen, bei der das Freibord möglichst klein ist und trotzdem ein Mitreissen und Austragen von körnigem Festbettmaterial mit Sicherheit vermieden wird.

Die Lösung dieser Aufgabe erfolgt gemäss der Erfindung dadurch, dass der Klappenflügel der Schlammwasserklappe in der dem Überstauraum zugewandten Fläche der Seitenwand eingelassen und um eine Achse aufklappbar ist, die einerseits mindestens annähernd auf der oberen Niveauhöhe des Festbettes und andererseits entlang dem unteren Rand des Klappenflügels verläuft und dass ferner Mittel vorgesehen sind, die ein subsittweises Aufklappen der Schlammklappe ermöglichen.

Der Klappenflügel der erfindungsgemässen Schlammwasserklappe bildet einerseits eine Art Überlaufkante für das aus dem Überstauraum abfliessende Wasser. Eventuell beim Abströmen des Wassers aufgewirbelte Festbettkörner müssen daher zuerst diesen Überlauf überwinden, ehe sie aus dem Festbett ausgeschwemmt werden. Dadurch können die Niveauhöhen des Schlitzes bzw. der vollständig geöffneten Schlammwasserklappe, die die Höhe der bei der eingangs erwähnten ersten Spülphase der Dreiphasen-Rückspülung vorhandenen und von der Luft zu durchdringende Restwassersäule bestimmen, gegenüber dem Freibord bisheriger Konstruktionen erheblich erniedrigt werden.

Die für ein Aufwirbeln des körnigen Materials massgebende Geschwindigkeit, mit der das ausströmende Wasser im Überstauraum fliesst, lässt sich durch das schrittweise Aufklappen der Schlammwasserklappe gering halten. Auf diese Weise wird erreicht, dass bei hohem Wasserstand im Überstauraum die Klappe nur geringfügig geöffnet wird, so dass infolge der Strömungsdrosselung an der nur teilweise geöffneten Schlammwasserklappe im Übestauraum nur mässige Wassergeschwindigkeiten erreicht werden ; damit ergibt sich gleichzeitig bei der erfindungsgemässen Konstruktion ein hoher « Überlauf » für das körnige Material an der Oberkante des Klappenflügels. Dieser hohe « Überlauf » entspricht in seiner Wirkung dem hohen Freibord der bisherigen Konstruktionen. Durch schrittweise weiteres Öffnen des Klappenflügels wird mit sinkendem Wasserstand die Schlammwasserklappe immer weiter geöffnet, ohne dass dadurch die Wassergeschwindigkeit über dem körnigen Material des Festbettes soweit erhöht wird, dass es zum Aufwirbeln und Mitreissen dieses Materials kommt.

Um auch geringfügige Verluste von körnigem Material an den seitlichen Enden der Schlammwasserklappe zu vermeiden, ist es vorteilhaft, wenn der Klappenflügel in seinem ganzen Aufklappbereich seitlich abgedichtet ist.

Im folgenden wird die Erfindung anhand eines Ausführungsbeispiels im Zusammenhang mit der Zeichnung näher erläutert.

Figur 1 bis 3 zeigen schematisch einen Ausschnitt einer Filteranlage, wobei in einem Schnitt I-I von Fig. 4 die die Schlammwasserklappe enthaltende Seitenwand des Filterbeckens dargestellt ist.

Figur 1 gibt das Wasserniveau im Überstauraum bei geschlossener Klappe und voll überstautem Festbett wieder, während die Fig. 2 und 3 die Wasserspiegel bei teilweise und bei ganz geöffneter Schlammwasserklappe zeigen.

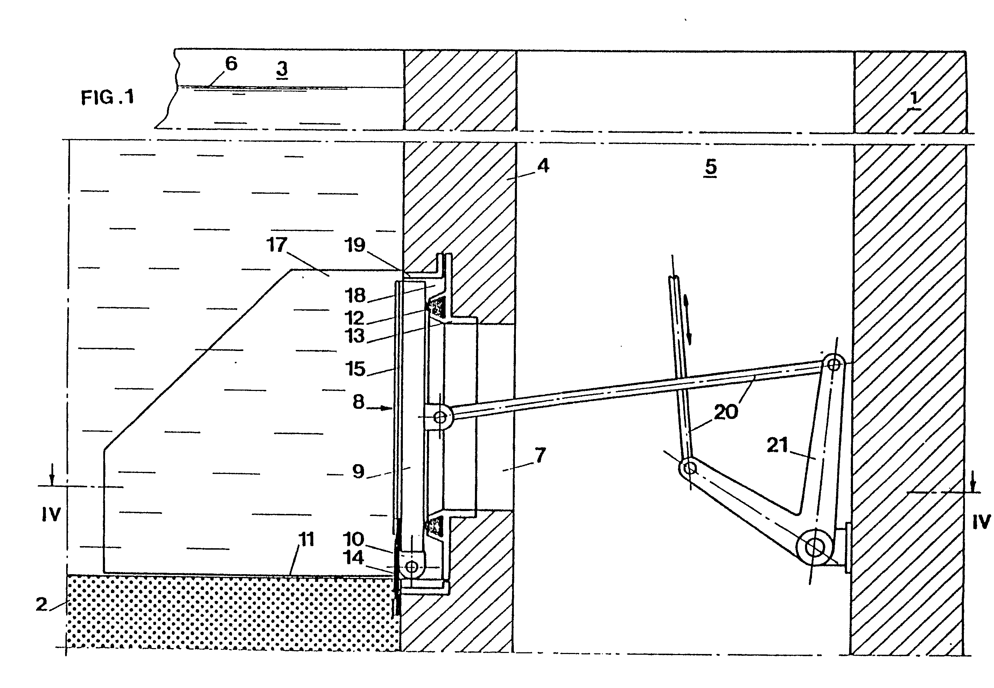

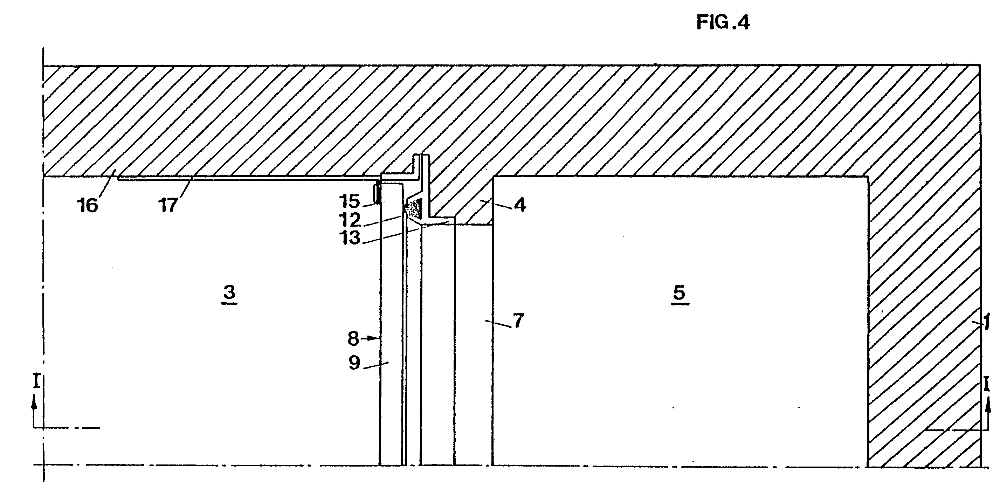

Figur 4 schliesslich ist ein Schnitt IV-IV von Fig. 1.

Eine Filteranlage, beispielsweise für die Wasserfiltration, enthält üblicherweise mindestens ein im allgemeinen aus Beton gefertigtes Becken 1, in dem auf einem Boden ein aus körnigem Material bestehendes Festbett 2 vorhanden ist. Der Innenraum über diesem Festbett 2 bildet den Überstauraum 3 für das zu filtrierende Roh- bzw. — beim Rückspülen — Schlammwasser, dessen Niveau mit 6 bezeichnet ist. Eine innere Seitenwand 4 trennt im Becken 1 das Festbett 2 und den Überstauraum 3 von einem Schlammwasserablaufkanal 5, durch den die beim Rückspülen aus dem Festbett 2 entfernten Verunreinigungen mit dem Schlammwasser weggeführt werden.

Ein Schlitz 7, der über die ganze Länge der Seitenwand 4 verläuft, verbindet den Überstauraum 3 mit dem Schlammwasserablaufkanal 5. Der Schlitz 7 ist durch eine Schlammwasserklappe 8 absperrbar, die erfindungsgemäss in der dem Überstauraum 3 zugewandten Fläche der Seitenwand 4 gelegen ist. Der Klappenflügel 9 der Schlammwasserklappe 8 ist scharnierartig um eine Achse 10 drehbar, die einerseits mindestens annähernd auf der Niveauhöhe 11 des Festbettes 2 und andererseits entlang der unteren Längskante des Klappenflügels 9 angeordnet ist.

Bei geschlossener Schlammwasserklappe 8 liegt ihr Klappenflügel 9 an einer Dichtung 12 an, die, in einem Dichtungsrahmen 13 gehalten, den Schlitz 7 umgibt.

Weitere Dichtelemente 14 und 15, die alle aus flexiblen Elastomeren, beispielsweise aus Gummi, bestehen, sind entlang der Unterkante des Klappenflügels 9 und an den seitlichen Enden der Schlammwasserklappe 8 (Fig. 4) vorgesehen, wobei die seitlichen, am Klappenflügel 9 befestigten und daher mit diesem beweglichen Dichtelemente 15 (Fig. 4) aufgrund ihrer Elastizität an der Seitenwand 16 (Fig. 4) des Beckens 1 anliegen ; um die Reibung dieser Dichtelemente 15 auf der Wand 16 zu verringern, ist diese im Bewegungsbereich der Schlammwasserklappe 8 mit einem Blech 17 verkleidet.

Der die geschlossene Schlammwasserklappe 8 aufnehmende Hohlraum 18 in der dem Überstauraum 3 zugewandten Fläche der Seitenwand 4 ist gegenüber dem Schlitz 7 erweitert und enthält zusätzlich die Dichtung 12 und den zugehörigen Dichtungsrahmen 13 ; er ist seinerseits gegen die Betonwände 4 bzw. 16 des Beckens 1 durch einen Rahmen 19 abgeschlossen.

Der die geschlossene Schlammwasserklappe 8 aufnehmende Hohlraum 18 in der dem Überstauraum 3 zugewandten Fläche der Seitenwand 4 ist gegenüber dem Schlitz 7 erweitert und enthält zusätzlich die Dichtung 12 und den zugehörigen Dichtungsrahmen 13 ; er ist seinerseits gegen die Betonwände 4 bzw. 16 des Beckens 1 durch einen Rahmen 19 abgeschlossen.

Die Betätigung der Schlammwasserklappe 8 erfolgt über ein, nur schematisch dargestelltes Gestänge 20 und einen Hebel 21. Wie bereits erwähnt, können in dem nicht dargestellten Steuersystem für die Filteranlage, durch das unter anderem beispielsweise das Rückspülen der Anlage in bekannter Weise automatisch gesteuert wird, Mittel — wie beispielsweise ein elektrischer Schrittmotor oder hydraulische und/oder pneumatische Servomotoren, die nach entsprechenden Programmen angesteuert werden — vorgesehen sein, die ein schrittweises Öffnen der Schlammwasserklappe 8 ermöglichen.

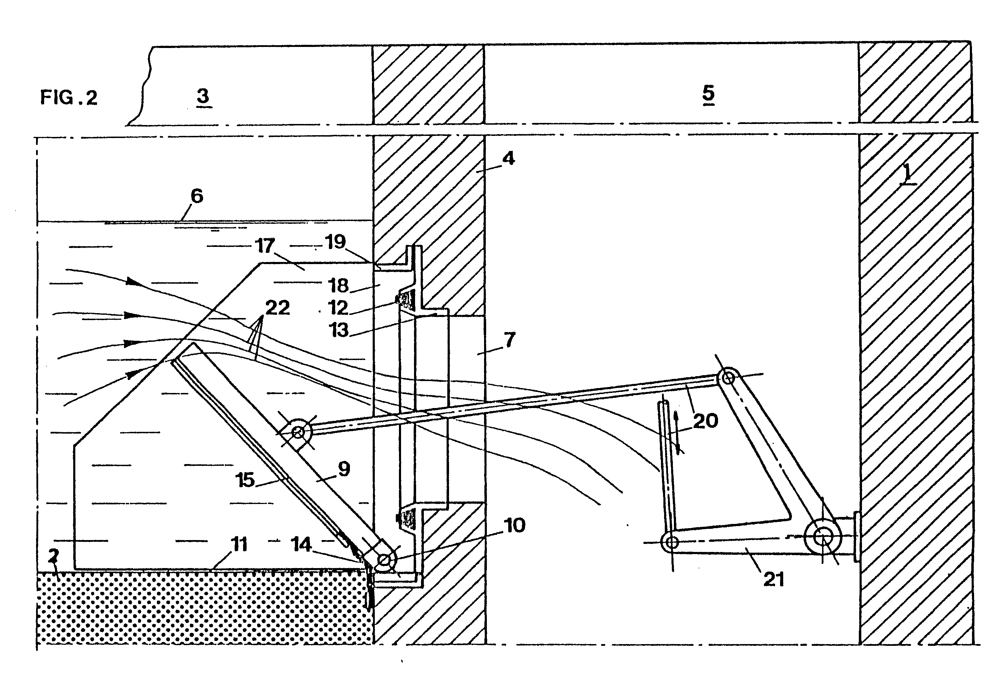

Mit einer derartigen Steuerung kann man durch ein zunächst nur teilweises Öffnen der Schlammwasserklappe 8 die Fliessgeschwindigkeit des im Überstauraum 3 gespeicherten Wassers oberhalb des Festbettes 2 niedrig halten, so dass ein Mitreissen und Austragen des körnigen Materials verhindert wird. Fig. 2 zeigt eine solche Zwischenstellung der Schlammwasserklappe 8 bei bereits teilweise abgesenktem Wasserspiegel 6 im Überstauraum 3. Die schematisch eingezeichneten Strömungslinien 22 verdeutlichen, dass die Oberkante des Klappenflügels 9 in der gezeigten Stellung für die unter ihrem Niveau liegenden, an das körnige Festbett 2 angrenzenden Wasserschichten als Überlaufkante wirkt, wodurch ein Ausschwemmen der möglicherweise von diesen Wasserschichten mitgerissenen Körner erschwert wird.

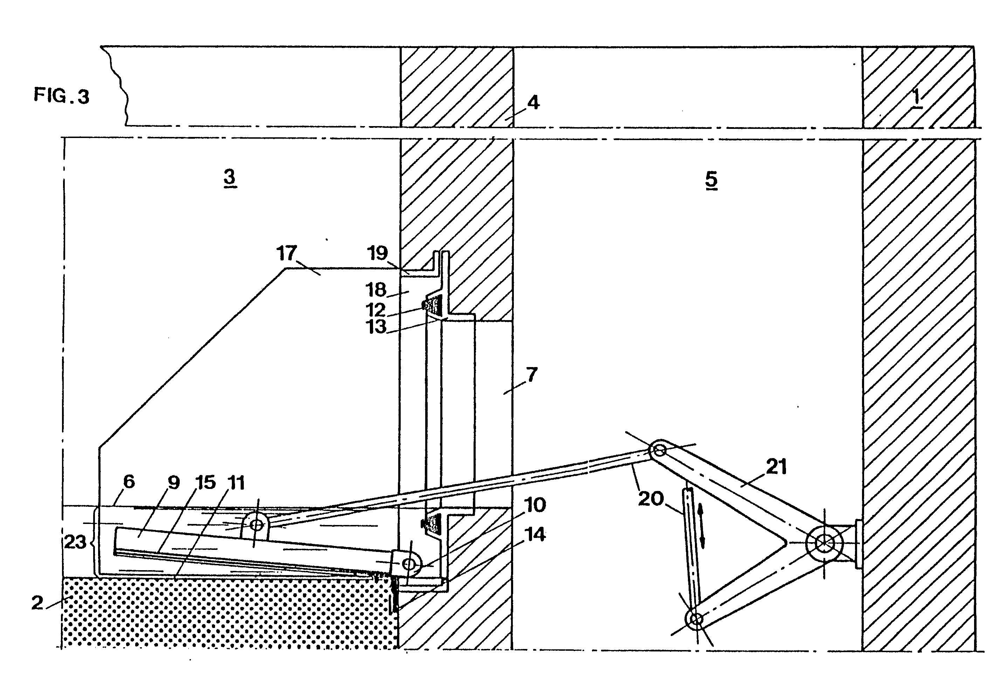

In der Darstellung der Fig. 3 ist die Schlammwasserklappe 8 voll geöffnet ; ihr Klappenflügel 9 liegt nahezu auf der Niveaufläche 11 des Festbettes 2 auf. Die Wasserhöhe 23 über dem Festbett 2, die, wie bereits geschildert, für die Spülphase mit Luft möglichst gering sein soll, kann bei der neuen Konstruktion für die Schlammwasserklappe 8 relativ klein gehalten werden, da die — in dem gezeigten Beispiel diese Wasserhöhe bestimmende — Höhe des Schlitzes 7 über dem Festbett 2 niedriger sein kann, als bei den bisherigen Schlammwasserklappen ; denn bei der neuen Konstruktion ist nicht mehr die Schlitzhöhe, sondern die Oberkante des teilweise geöffneten Klappenflügels 9 massgebend für das das Austragen des körnigen Materials verhindernde Freibord zwischen Schlammwasserauslass und Festbettniveau.

**Patentansprüche**

1. Rückspülbare Filteranlage für die Aufbereitung von Flüssigkeiten mit mindestens einem Festbett aus körnigem Material, über dem ein Überstauraum für die zu filtrierende Flüssigkeit vorhanden ist, aus dem durch eine Seitenwand ein mit einer Schlammwasserklappe verschließbarer Schlitz in einen Schlammwasserablaufkanal für die Rückspülflüssigkeit führt, dadurch gekennzeichnet, daß der Klappenflügel (9) der Schlammwasserklappe (8) in der dem Überstauraum (3) zugewandten Fläche der Seitenwand (4) eingelassen und um eine Achse (10) aufklappbar ist, die einerseits mindestens annähernd auf der oberen Niveauhöhe (11) des Festbettes (2) und andererseits entlang dem unteren Rand des Klappenflügels (9) verläuft und daß ferner Mittel vorgesehen sind, die ein schrittweises Aufklappen der Schlammwasserklappe (9) ermöglichen.

2. Filteranlage nach Anspruch 1, dadurch gekennzeichnet, daß der Klappenflügel (9) in seinem ganzen Aufklappbereich seitlich abgedichtet ist.

## Claims

1. A backwashing filter plant for the preparation of liquids, the plant having at least one stationary bed which consists of a granular material and over which a flood chamber for the liquid to be filtered is disposed, one side wall of the flood chamber being formed with a slot which is closable by means of a sludge water valve and via which the flood chamber communicates with a sludge water discharge channel for the backwashing liquid, characterised in that the moving member (9) of the sludge water valve (8) is let into that surface of the side wall (4) which is near the flood chamber (3), the moving member (9) being adapted to swing open about an axis (10) which extends at least substantially near the top level (11) of the solid bed (2) and also extends along the bottom edge of the sludge valve moving member (9) ; and means are provided for progressive swinging open of said moving member (9).

2. A filter plant according to claim 1, characterised in that the sludge valve moving member (9) is sealed laterally over the whole of its swinging-open zone.

## Revendications

1. Installation de filtration lavable à contre-courant pour la préparation de liquides, comportant au moins un lit fixe de matière granulaire au-dessus duquel se trouve un espace de submersion pour le liquide à filtrer, à partir duquel une fente, se trouvant dans une paroi latérale et obturable par une vanne d'eau boueuse, mène à un canal de sortie d'eau boueuse pour le liquide de lavage à contre-courant, caractérisée en ce que la porte de vanne (9) de la vanne d'eau boueuse (8) est placée dans la face de la paroi latérale (4) tournée vers l'espace de submersion (3) et peut pivoter autour d'un axe (10) qui s'étend d'une part au moins approximativement à hauteur du niveau supérieur (11) du lit fixe (2) et d'autre part le long du bord inférieur de la porte de vanne (9), et en ce que des moyens sont prévus pour permettre un pivotement par étapes de la vanne d'eau boueuse (9).

2. Installation de filtration selon la revendication 1, caractérisée en ce que la porte de vanne (9) est étanchéifiée latéralement dans toute sa zone de pivotement.

FIG.1

FIG . 2

0 029 468

3     5

4

1

6

17   19

18

12

13

7

22

9

15

20

11

14

2

10

21

FIG.3

FIG.4

0 029 468